# EUROPEAN PATENT APPLICATION

(11) **EP 4 527 867 A1**
(43) Date of publication of application: **26.03.2025**
(21) Application number: 24750517.5
(22) Date of filing: 29.01.2024
(51) Int. Cl.: C08F 257/02, C08F 212/08, C08F 220/02, C09J 11/08, C09J 133/00

(54) **TACKIFYING RESIN**

(30) Priority: 31.01.2023 KR 20230013019
(71) Applicant: Kolon Industries, Inc., Seoul 07793 (KR)
(72) Inventor: LEE, Wan Jae, Seoul 07793 (KR); KIM, Myung Jong, Seoul 07793 (KR); PARK, Seung Soo, Seoul 07793 (KR)
(74) Representative: Vossius & Partner Patentanwälte Rechtsanwälte mbB
(86) International application number: PCT/KR2024/001348
(87) International publication number: WO 2024/162718

(57) **Abstract**

The present disclosure provides a tackifying resin including: a repeating unit (a) derived from a petroleum resin-based monomer; a repeating unit (b) derived from α-methylstyrene; and a repeating unit (c) derived from a (meth)acrylic monomer, wherein at least some of unsaturated bonds included in the repeating units (a) to (c) are hydrogenated. The tackifying resin has excellent compatibility with a base polymer, and thus, transparency and adhesive strength of an adhesive including the tackifying resin may be improved.

## Description

### Technical Field

The present disclosure relates to a tackifying resin.

### Background Art

Adhesives are used as materials for fixing members in various fields including automobiles, electronic and electrical products, and construction materials.

For example, on an automobile manufacturing site, adhesives are used to fix automobile interior members to the interior of an automobile. In addition, on a manufacturing site for electronic devices such as mobile phones and liquid crystal displays, adhesives are used to fix cushioning materials or the like installed inside an electronic product for the purpose of protecting the electronic product from impacts, to fix exterior members of an electronic product, and to fix members constituting image display devices such as liquid crystal display devices, organic electroluminescent (EL) display devices, and plasma display panels (PDPs).

For the adhesives, there has been a transition from solvent-based adhesives to water-based adhesives in the interest of reducing environmental load, and in recent years, there has been a preference for using aqueous acryl-based adhesives that have an acryl-based polymer or the like dispersed in an aqueous medium.

The acryl-based adhesive is often used in a mixture with a tackifying resin, to further improve adhesion such as adhesive strength and constant weight holding power.

However, when used with such a tackifying resin, compatibility with an acryl-based polymer included in an acryl adhesive may deteriorate, which may make the adhesive opaque, such that a photocuring reaction may not be easily performed and heat resistance may also deteriorate.

Accordingly, the need for a tackifying resin having excellent compatibility with an acryl-based polymer has been increasing.

### Disclosure

### Technical Problem

To address the aforementioned problem, the present disclosure provides a tackifying resin having excellent compatibility with a base polymer and a method of preparing the tackifying resin.

### Technical Solution

One aspect of the present disclosure relates to a tackifying resin including: a repeating unit (a) derived from a petroleum resin-based monomer; a repeating unit (b) derived from α-methylstyrene; and a repeating unit (c) derived from a (meth)acrylic monomer, wherein at least some of the repeating units (a) to (c) are hydrogenated.

### Advantageous Effects

The tackifying resin according to the present disclosure may have improved compatibility with a base polymer and may have a reduced absorption level for ultraviolet rays.

Accordingly, the tackifying resin according to the present disclosure may have excellent compatibility with the base polymer, and thus, an adhesive including the base polymer and the tackifying resin may have improved transparency and heat resistance.

Additionally, as the absorption level for ultraviolet rays decreases, the amount of ultraviolet rays reaching a photopolymerization initiator increases, and thus, the heat resistance of the adhesive may be improved.

### Description of Drawings

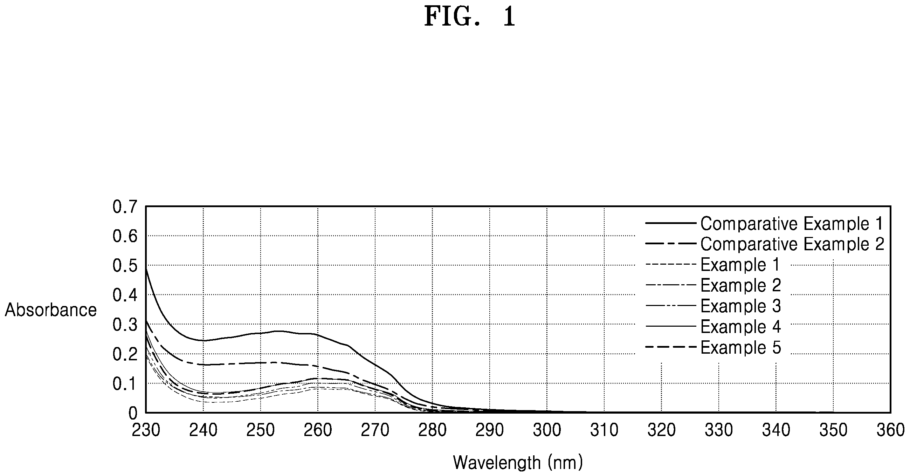

FIG. 1 is a graph showing the results of measuring the UV absorbance of tackifying resins according to Examples and Comparative Examples.

### Best Mode

### Mode for Invention

Hereinafter, more aspects and various embodiments of the present disclosure will be described in more detail.

The terms or words used herein should not be limited to usual or dictionary meanings, and should be interpreted as meanings and concepts corresponding to the technical idea of the present disclosure, based on the principle that the inventor can appropriately define the concepts of terms to explain the disclosure in the best manner.

The terminology used herein is used for the purpose of describing particular embodiments only and is not intended to limit the present disclosure. As used herein, the singular forms are intended to include the plural forms as well, unless the context clearly indicates otherwise. In the present disclosure, it should be understood that terms such as "include" or "have" are intended to specify the presence of a feature, number, step, operation, component, part or combination thereof described in the specification, but do not exclude in advance the possibility of the presence or addition of one or more other features, numbers, steps, operations, components, parts or combinations thereof.

Specifically, one aspect of the present disclosure relates to a tackifying resin including: a repeating unit (a) derived from a petroleum resin-based monomer; a repeating unit (b) derived from α-methylstyrene; and a repeating unit (c) derived from a (meth)acrylic monomer, wherein at least some of unsaturated bonds included in the repeating units (a) to (c) are hydrogenated.

For example, at least some of unsaturated bonds included in the repeating units (a) to (c) may be hydrogenated through a hydrogenation reaction performed in the presence of a hydrogenation catalyst.

The hydrogenation reaction refers that hydrogen is added to double bonds or triple bonds of a molecule having unsaturated bonds to saturate the valence. The hydrogenation reaction may be divided into: a complete hydrogenation reaction in which hydrogen is added to all unsaturated bonds in a molecule; and a partial hydrogenation reaction in which hydrogen is added to some unsaturated bonds in a molecule. The hydrogenation defined in the present disclosure may refer to a state in which at least some of the unsaturated bonds included in the repeating units (a) to (c) are hydrogenated so that the valence is saturated.

According to an embodiment, at least some of unsaturated bonds included in the repeating units (a) to (c) may be hydrogenated, thereby reducing the ultraviolet absorbance of the tackifying resin. When the ultraviolet absorbance of the tackifying resin is reduced, an adhesive including the tackifying resin may have an increased amount of ultraviolet rays reaching a photopolymerization initiator included in the adhesive. Accordingly, the heat resistance (shear adhesion failure test(SAFT)) of the adhesive including the tackifying resin may be improved.

According to an embodiment, the petroleum resin-based monomer may include a commercially applicable liquid C5-C20 fraction, a diolefin, or a dicyclopentadiene.

According to another embodiment, the petroleum resin-based monomer may include a C5 fraction, a C9 fraction, a diolefin, or a dicyclopentadiene.

For example, the C5 fraction may include 1-pentene, 2-methyl-2-butene n-pentane, propadiene, cyclopentadiene, piperylene, isoprene, cyclopentene, and the like.

For example, the C9 fraction may include a styrene-based monomer, dicyclopentadiene, indene, trans-β-methylstyrene, methylindene, vinyltoluene, or benzene/toluene/xylene (BTX), and the like.

For example, the diolefin may include propadiene, dicyclopentadiene, cyclopentene, and the like.

According to an embodiment, the petroleum resin-based monomer may include a C9 fraction.

According to an embodiment, the C9 fraction may include a styrene-based monomer.

For example, the styrene-based monomer may be represented by Formula 1: 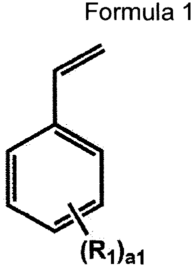 wherein, in Formula 1,
a1 is an integer from 0 to 5, and
R₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, R₁ and R₂ are each independently: hydrogen, deuterium, -F, -Cl, -Br, -I, a hydroxyl group, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a hydroxyl group, a cyano group, a C₆-C₂₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a hydroxyl group, a cyano group, a C₁-C₂₀ alkyl group, a C₆-C₂₀ aryl group, or any combination thereof.

According to an embodiment, R₁ and R₂ may each independently be hydrogen, a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.

a1 may be an integer from 0 to 5.

According to an embodiment, the styrene-based monomer may include styrene.

According to an embodiment, the tackifying resin may include a repeating unit (b) derived from α-methylstyrene.

According to an embodiment, the tackifying resin may include, as a unit for adjusting molecular weight, a repeating unit (b) derived from α-methylstyrene. For example, when the tackifying resin includes a repeating unit (b) derived from α-methylstyrene, an weight average molecular weight of the tackifying resin may be reduced. Accordingly, the tackifying resin of the present disclosure may satisfy the weight average molecular weight of 5,000 g/mol or less or 3,000 g/mol, and thus, the compatibility and reactivity with a base polymer described below may be improved. Accordingly, the transparency and heat resistance of an adhesive including the tackifying resin may be further improved.

According to an embodiment, at least some of the unsaturated bonds included in the repeating units (a) and (b) may be hydrogenated. For example, some of the aromatic rings, which are unsaturated bonds included in the repeating units (a) and (b), may be hydrogenated.

For example, in the tackifying resin, at least some of the unsaturated bonds included in the repeating units (a) and (b) may be hydrogenated, such that the tackifying resin may include a repeating unit represented by Formula 1-1: 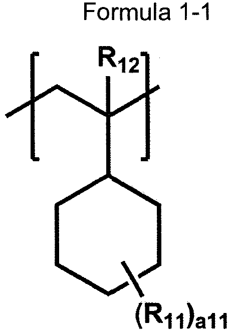 wherein, in Formula 1-1,
a11 is an integer from 0 to 5, and
R₁₁ and R₁₂ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, in Formula 1-1, R₁₁ may be hydrogen, and R₁₂ may be hydrogen or a methyl group.

According to an embodiment, the tackifying resin may include a repeating unit represented by Formula 1-1 by i) polymerizing the tackifying resin using a hydrogenated petroleum resin-based monomer or hydrogenated α-methylstyrene, ii) polymerizing a petroleum resin-based monomer and α-methylstyrene to form a polymer, and then performing a hydrogenation reaction, or iii) polymerizing a petroleum resin-based monomer, α-methylstyrene, and a (meth)acrylic monomer to form a polymer, and then performing a hydrogenation reaction.

For example, the tackifying resin may include a repeating unit represented by Formula 1-1 by i) polymerizing the tackifying resin using a monomer represented by Formula 1-2, ii) polymerizing a petroleum resin-based monomer and α-methylstyrene to form a polymer, and then performing a hydrogenation reaction, or iii) polymerizing a petroleum resin-based monomer, α-methylstyrene, and a (meth)acrylic monomer to form a polymer, and then performing a hydrogenation reaction: 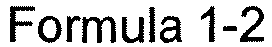 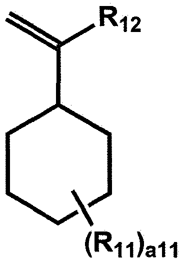 wherein, in Formula 1-2,
a11 is an integer from 0 to 5, and
R₁₁ and R₁₂ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, in Formula 1-2, R₁₁ may be hydrogen, and R₁₂ may be hydrogen or a methyl group.

According to an embodiment, the (meth)acrylic monomer may be represented by Formula 2: 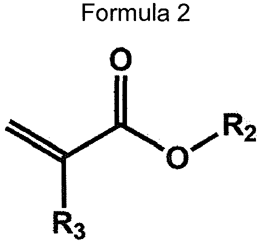 wherein, in Formula 2,
R₂ and R₃ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -CI, -Br, -I, a hydroxyl group, a cyano group, a C₁-C₂₀ alkyl group, a C₁-C₂₀ alkoxy group, or any combination thereof.

According to an embodiment, R₃ and R₄ are each independently: hydrogen, deuterium, -F, -Cl, -Br, -I, a hydroxyl group, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a hydroxyl group, a cyano group, a C₆-C₂₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a hydroxyl group, a cyano group, a C₁-C₂₀ alkyl group, a C₆-C₂₀ aryl group, or any combination thereof.

According to an embodiment, R₃ may be hydrogen, a methyl group, an ethyl group, an n-propyl group, an isopropyl group, an n-butyl group, a sec-butyl group, an isobutyl group, or a tert-butyl group.

According to another embodiment, R₃ may be hydrogen or a methyl group.

According to an embodiment, R₄ may be a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.

According to another embodiment, R₄ may be a methyl group or an ethyl group.

According to an embodiment, the (meth)acrylic monomer may include methyl acrylate, ethyl acrylate, propyl acrylate, butyl acrylate, methyl metacrylate, ethyl metacrylate, propyl metacrylate, butyl metacrylate, 2-ethylhexyl acrylate, or any combination thereof.

According to an embodiment, an amount of the repeating unit (a) derived from a petroleum resin-based monomer may be less than or equal to an amount of the repeating unit (b) derived from α-methylstyrene. For example, the amount of the repeating unit (a) derived from a petroleum resin-based monomer may be less than the amount of the repeating unit (b) derived from α-methylstyrene.

For example, when the amount of the repeating unit (b) derived from α-methylstyrene as a unit for adjusting molecular weight is greater than the amount of the repeating unit (a) derived from a petroleum resin-based monomer, the weight average molecular weight of the tackifying resin may be more easily adjusted to 3,000 g/mol or less.

According to an embodiment, the amount of the repeating unit (a) derived from a petroleum resin-based monomer may be 10 to 50 wt% based on the total weight of the tackifying resin, the amount of the repeating unit (b) derived from α-methylstyrene may be 10 to 80 wt% based on the total weight of the tackifying resin, and the amount of the repeating unit (c) derived from a (meth)acrylic monomer may be 5 to 40 wt% based on the total weight of the tackifying resin.

For example, the amount of the repeating unit (a) derived from a petroleum resin-based monomer may be 10 to 50 wt%, 10 to 45 wt%, 15 to 45 wt%, 20 to 45 wt%, 20 to 40 wt%, or 25 to 40 wt%, based on the total weight of the tackifying resin.

For example, the amount of the repeating unit (b) derived from α-methylstyrene may be 10 to 80 wt%, 20 to 80 wt%, 30 to 80 wt%, or 30 to 60 wt%, based on the total weight of the tackifying resin.

For example, the amount of the repeating unit (c) derived from a (meth)acrylic monomer may be 5 to 40 wt%, 5 to 35 wt%, or 10 to 35 wt%, based on the total weight of the tackifying resin.

According to an embodiment, the weight average molecular weight (Mw) of the tackifying resin may be 3,000 g/mol or less. For example, the Mw of the tackifying resin may be 2,900 g/mol or less, 2,800 g/mol or less, or 2,500 g/mol or less.

According to an embodiment, the Mw of the tackifying resin may be 200 to 3,000 g/mol, 400 to 3,000 g/mol, 500 to 3,000 g/mol, 600 to 3,000 g/mol, 200 to 2,500 g/mol, 400 to 2,500 g/mol, 500 to 2,500 g/mol, 600 to 2,500 g/mol, 200 to 2,450 g/mol, 400 to 2,450 g/mol, 500 to 2,450 g/mol, or 600 to 2,450 g/mol.

According to an embodiment, a number average molecular weight (Mn) of the tackifying resin may be 1,000 g/mol or less.

For example, the Mn of the tackifying resin may be 850 g/mol or less, 800 g/mol or less, 200 to 1,000 g/mol, 400 to 1,000 g/mol, 600 to 1,000 g/mol, 200 to 850 g/mol, 400 to 850 g/mol, 600 to 850 g/mol, 200 to 800 g/mol, 400 to 800 g/mol, 600 to 800 g/mol, or 720 to 800 g/mol.

According to an embodiment, a Z-average molecular weight (Mz) of the tackifying resin may be 7,000 g/mol or less.

For example, the Mz of the tackifying resin may be 100 to 7,000 g/mol, 100 to 6,900 g/mol, 500 to 7,000 g/mol, 1,000 to 7,000 g/mol, 1,000 to 5,000 g/mol, or 1,000 to 2,500 g/mol.

According to an embodiment, a polymer dispersity index (PDI) of the tackifying resin may be 1 to 3. For example, the PDI of the tackifying resin may be 1.1 to 3, 1.2 to 3, 1.3 to 3, 1 to 2, 1.2 to 2, 1.3 to 2, 1 to 1.9, 1.2 to 1.9, or 1.3 to 1.9.

For example, when the Mw and PDI of the tackifying resin satisfy the above ranges, compatibility with a base polymer, for example, an acryl-based polymer, may be further improved.

According to an embodiment, a softening point of the tackifying resin may be from 40 to 120 °C. For example, the softening point of the tackifying resin may be 45 to 120 °C, 45 to 110 °C, 45 to 100 °C, 45 to 80 °C, 50 to 120 °C, 50 to 110 °C, 50 to 100 °C, 50 to 85 °C, or 50 to 80 °C.

According to an embodiment, a viscosity at 160 °C of the tackifying resin may be 20 cps to 200 cps. For example, the viscosity at 160 °C of the tackifying resin may be 20 cps to 150 cps, 20 cps to 100 cps, 20 cps to 80 cps, 20 cps to 78 cps, 30 cps to 150 cps, 30 cps to 100 cps, 30 cps to 80 cps, 30 cps to 78 cps, 35 cps to 150 cps, 35 cps to 100 cps, 35 cps to 80 cps, or 35 cps to 78 cps.

According to an embodiment, the viscosity at 180 °C of the tackifying resin may be 1 cps to 100 cps. For example, the viscosity at 180 °C of the tackifying resin may be 1 cps to 80 cps, 1 cps to 60 cps, 1 cps to 40 cps, 1 cps to 34 cps, 1 cps to 32 cps, 10 cps to 80 cps, 10 cps to 60 cps, 10 cps to 40 cps, 10 cps to 34 cps, or 10 cps to 32 cps.

According to an embodiment, a mol% of the repeating unit (c) derived from a (meth)acrylic monomer as measured via ¹H-NMR may be 1 to 80 mol%, 1 to 70 mol%, 1 to 60 mol%, 5 to 50 mol%, or 10 to 50 mol%, based on the total number of moles of the repeating units derived from the monomers included in the tackifying resin.

For example, the mol% of the repeating unit (c) derived from a (meth)acrylic monomer may be confirmed through analysis of peaks obtained by ¹H-NMR measurement.

According to an embodiment, an aromaticity of the tackifying resin prior to hydrogenation as measured via NMR may be 1 to 90 %.

For example, the aromaticity of the tackifying resin may be confirmed through analysis of peaks obtained by ¹H-NMR measurement.

According to an embodiment, an UV absorbance (a THF solvent, a concentration of 70 ppm) at a wavelength of 240 nm to 260 nm of the tackifying resin may be 0.1 or less. For example, the UV absorbance may refer to an average absorbance value which is measured for ultraviolet rays having a wavelength of 240 nm to 260 nm after dissolving the tackifying resin in a THF solvent to at a concentration of 70 ppm.

Another aspect of the present disclosure may provide a method of preparing a tackifying resin, the tackifying resin including: a petroleum resin-based monomer; α-methylstyrene; and a (meth)acrylic monomer, and having an UV absorbance (a THF solvent, a concentration of 70 ppm) at a wavelength of 240 nm to 260 nm of 0.1 or less.

According to an embodiment, a first monomer composition including a petroleum resin-based monomer and α-methylstyrene may be prepared. A polymerization catalyst may be added to the first monomer composition and then performing catalytic polymerization to prepare a first polymer composition including the first polymer. Subsequently, a hydrogenation catalyst may be added to the first polymer composition, and then a hydrogenation reaction may be performed to hydrogenate some of the unsaturated bonds included in the first polymer to thereby prepare a partially hydrogenated first polymer composition. Subsequently, a (meth)acrylic monomer may be added to the partially hydrogenated first polymer composition to prepare a second monomer composition. Subsequently, the second monomer composition may be subjected to a thermal polymerization and a degassing reaction to prepare a tackifying resin.

According to another embodiment, a first monomer composition including a petroleum resin-based monomer and α-methylstyrene may be prepared. A polymerization catalyst may be added to the first monomer composition, and then catalytic polymerization may be performed to prepare a first polymer composition including a first polymer. Subsequently, a (meth)acrylic monomer may be added to the first polymer composition to prepare a second monomer composition. Subsequently, the second monomer composition may be subjected to a thermal polymerization to prepare a second polymer composition including a second polymer. Subsequently, a hydrogenation catalyst may be added to the second polymer composition, a hydrogenation reaction may be performed, a partial hydrogenation reaction may be performed to make some of the unsaturated bonds included in the second polymer hydrogenated, and then, a degassing reaction may be performed to thereby prepare a tackifying resin.

According to another embodiment, a first monomer composition including a petroleum resin-based monomer, α-methylstyrene, and a vinyl-based monomer may be prepared. A polymerization catalyst may be added to the first monomer composition and then catalytic polymerization may be performed to prepare a first polymer composition including a first polymer. Subsequently, a (meth)acrylic monomer may be added to the first polymer composition to prepare a second monomer composition. Subsequently, the second monomer composition may be subjected to a thermal polymerization and a degassing reaction to prepare a tackifying resin.

For example, the vinyl-based monomer may include a vinyl cycloalkane monomer. For example, the vinyl-based monomer may include a vinylcyclopentane-based monomer, a vinylcyclohexane-based monomer, or any combination thereof. For example, the vinyl-based monomer may be represented by Formula 1-2.

For example, the types, amounts, and properties of the petroleum resin-based monomer, the (meth)acrylic monomer, and the α-methyl styrene, and the properties of the tackifying resin may be referred to the above-described description.

For example, the monomer in the monomer composition may refer to the remaining components excluding a solvent included in the monomer composition.

According to an embodiment, the monomer composition may further include a solvent.

For example, the solvent may include xylene.

According to an embodiment, the polymerization catalyst may include a Lewis acid, a halohydric acid, AlCl₃, BF₃, or any combination thereof. For example, the polymerization catalyst may include AlCl₃, BF₃, SnCl₄, TiCl₄, AgClO₄, I₂, or any combination thereof.

According to an embodiment, the catalytic polymerization may be performed at a temperature of 100 °C or less. For example, the catalytic polymerization may be performed at a temperature range of -50 to 100 °C, -30 to 100 °C, -10 to 100 °C, -50 to 80 °C, -30 to 80 °C, or -10 to 80°C.

According to an embodiment, the thermal polymerization may be performed at a temperature range of 150 to 300 °C. For example, the thermal polymerization may be performed at a temperature of 200 to 300 °C, 220 to 300 °C, 230 to 300 °C, 200 to 280 °C, or 200 to 260 °C.

For example, the degassing reaction may be performed at a temperature of 150 °C to 300 °C and a pressure of 1 mbar to 50 mbar for 1 minute to 20 minutes.

According to another embodiment, the degassing reaction may be performed at a temperature of 220 °C to 280 °C and a pressure of 5 mbar to 25 mbar for 5 minutes to 15 minutes, or at a temperature of 240 °C to 260 °C and a pressure of 5 mbar to 15 mbar for 8 minutes to 12 minutes.

According to an embodiment, the hydrogenation reaction may be performed in the presence of a hydrogenation catalyst (hydrogen addition catalyst). For example, the hydrogenation catalyst may include a palladium-based catalyst.

According to an embodiment, the hydrogenation reaction may be performed under conditions of a temperature of 100 to 300 °C and a pressure of 20 to 100 bar for 1 to 3 hours in the presence of a hydrogenation catalyst (hydrogen addition catalyst).

According to an embodiment, the above-described tackifying resin may be applied to an adhesive. According to another embodiment, the above-described tackifying resin may be applied to an acryl-based adhesive.

Another aspect of the present disclosure may provide an adhesive including the above-described tackifying resin. For example, the tackifying resin may impart adhesive strength to the adhesive.

According to an embodiment, the adhesive may include: the tackifying resin; and a base polymer. For example, the adhesive may be an acryl-based adhesive including: the tackifying resin; and an acryl-based polymer. For example, the tackifying resin may have excellent compatibility with the base polymer, for example, an acryl-based polymer, and thus, the adhesive may have excellent transparency and adhesive strength.

According to an embodiment, the adhesive may be a photocurable tackifying resin.

For example, the adhesive may further include a crosslinking agent and a photopolymerization initiator in addition to the tackifying resin and the base polymer.

According to an embodiment, the photopolymerization initiator may be one or more selected from the group consisting of benzoin methyl ether, benzoin ethyl ether, benzoin isopropyl ether, benzoin n-butyl ether, benzoin phenyl ether, benzyl diphenyl disulfide, benzyl dimethyl ketal, Irgacure series from Ciba Specialty Chemicals, Inc., anthraquinone, naphthoquinone, 3,3-dimethyl-4-methoxybenzophenone, benzophenone, pivalone ethyl ether, 1,1-dichloroacetophenone, p-t-butyldichloroacetophenone, dimer of hexaaryl-imidazole, 2,2'-diethoxyacetophenone, 2,2'-diethoxy-2-phenylacetophenone, 2,2'-dichloro-4-phenoxyacetophenone, phenyl glyoxylate, α-hydroxy isobutylphenone, dibenzospan, 1-(4-isopropylphenyl)-2-hydroxy-2-methyl-1-propanone, 2-methyl-[4-(methylthio)phenyl]-2-morpholino-1-propanone, tri-bromophenylsulfone, triaryl phosphine oxide, and tribromomethylphenylsulfone. For example, the photopolymerization initiator may be included in the adhesive in an amount of 0.01 to 10 wt%, or 0.02 to 5 wt%.

According to an embodiment, the amount of the tackifying resin in the adhesive may be 1 wt% or more based on the total weight of the adhesive.

According to another embodiment, the amount of the tackifying resin in the adhesive may be 1 to 30 wt%, 5 to 30 wt%, 10 to 30 wt%, 1 to 25 wt%, 5 to 25 wt%, or 10 to 25 wt%, based on the total weight of the adhesive.

According to an embodiment, the adhesive may be transparent. In this case, the adhesive may allow light to penetrate evenly therein, allowing a photocuring reaction to proceed evenly. Accordingly, the heat resistance and the like of the adhesive may be further improved.

According to an embodiment, the adhesive may include a base polymer, the tackifying resin, and a photopolymerization initiator. In this case, the tackifying resin may have low absorbance for ultraviolet rays, and thus, the amount of ultraviolet rays reaching the photopolymerization initiator may increase, thereby further promoting a polymerization reaction upon light irradiation. Accordingly, adhesive strength and shear adhesive strength of the adhesive including the tackifying resin may be improved.

### [Definition of terms]

In the present specification, a C₁-C₂₀ alkyl group refers to a linear or branched aliphatic hydrocarbon monovalent group having 1 to 20 carbon atoms, and specific examples thereof include a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, a n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, and the like. In this specification, a C₁-C₂₀ alkylene group refers to a divalent group having the same structure as the C₁-C₂₀ alkyl group.

In the present specification, C₁-C₂₀ alkoxy group refers to a monovalent group having Formula of -OA₁₀₁ (wherein, A₁₀₁ is the C₁-C₂₀ alkyl group), and specific examples thereof include a methoxy group, an ethoxy group, an isopropyloxy group, and the like.

In the present specification, C₆-C₂₀ aryl group refers to a monovalent group having a carbocyclic aromatic system having 6 to 20 carbon atoms, and includes a phenyl group, a naphthyl group, an anthracenyl group, a phenanthrenyl group, a pyrenyl group, and the like. When the C₆-C₂₀ aryl group includes two or more rings, the two or more rings may be connected to each other.

Hereinafter, the present disclosure will be described in more detail through examples. These examples are for illustrative purposes only to describe the present disclosure in more detail, and it will be apparent to those skilled in the art that these examples should not be construed as limiting the scope of the present disclosure.

### Example 1. Preparation of tackifying resin

In a 2,000 ml chemical reactor equipped with a stirrer, a reflux condenser, a thermometer, and a nitrogen injection device, styrene (SM) and α-methylstyrene (AMS) were injected according to mixing amounts (SM: 280 g, AMS: 420 g) described in Table 1 below, and xylene as a solvent was injected so that the weight ratio thereof with respect to the weight sum of SM and AMS was 1:1, to thereby prepare a first composition. 0.1 wt% of BF₃ as a catalyst was added to the first composition, polymerization was performed at 30 °C for 120 minutes, and then, neutralization was performed by addition of 10 g of calcium hydroxide to prepare a first polymer composition.

Subsequently, 280 g of a palladium catalyst (KOH-5, NECC, Inc.) was added to the first polymer composition, and then, a hydrogenation reaction was performed under the conditions of a hydrogen pressure of 80 bar and a reaction temperature of 270 °C for 90 minutes to prepare a hydrogenated resin composition.

Subsequently, methyl acrylate (MA) was injected into 420 g of the hydrogenated resin composition according to the amount (MA: 180 g) described in Table 1 below, and xylene as a solvent was additionally injected so that the weight ratio thereof with respect to MA was 1:1, to thereby prepare a second composition. Subsequently, the second composition was subjected to thermal polymerization at a temperature of 240 °C for 2 hours to prepare a second polymer composition.

Subsequently, the second polymer composition was subjected to a degassing reaction under the conditions of a temperature of 250 °C and a pressure of 10 mbar for 10 minutes to prepare a tackifying resin.

### Examples 2 to 10 and Comparative Examples 1 to 3

A tackifying resin was prepared in the same manner as in Example 1, except that SM, AMS, MA, a first polymer composition, and a target to be hydrogenatedtarget were changed as shown in Table 1 below.

When the target to be hydrogentated was a first polymer composition, the first polymer composition, which is a polymer of SM and AMS, was hydrogenated, and
when the target to be hydrogenated was a second polymer composition, MA was added to a polymer of SM and AMS to prepare a second polymer composition, and then, the second polymer composition was hydrogenated.

**[Table 1]**

| | First polymer composition Polymerization conditions | | Second polymer composition Polymerization conditions | | | Hydrogenation conditions | |
|---|---|---|---|---|---|---|---|
| | Amount of SM (g) | Amount of AMS (9) | Resin | | Amount of MA (g) | Target to be hydrogen ated | Hydrogena tion temperatur e (°C) |
| | | | Type | Amount (9) | | | |
| Example 1 | 280 | 420 | Hydrogen ated resin | 420 | 180 | compositi on | 270 |
| Example 2 | 280 | 420 | Hydrogen ated resin | 300 | 300 | First polymer compositi on | 200 |
| Example 3 | 280 | 420 | Hydrogen ated resin | 420 | 180 | First polymer compositi on | 200 |
| Example 4 | 280 | 420 | Hydrogen ated resin | 420 | 180 | First polymer compositi on | 170 |
| Example 5 | 280 | 420 | Hydrogen ated resin | 480 | 120 | First polymer compositi on | 170 |
| Example 6 | 221.05 | 378.95 | Hydrogen ated resin | 570 | 30 | First polymer compositi on | 200 |
| Example 7 | 300 | 300 | Hydrogen ated resin | 260 | 240 | First polymer compositi on | 200 |
| Example 8 | 150 | 450 | Hydrogen ated resin | 480 | 120 | First polymer compositi on | 200 |
| Example 9 | 300 | 300 | Hydrogen ated resin | 540 | 60 | First polymer compositi on | 200 |
| Example 10 | 280 | 420 | First polymer compositi on | 480 | 120 | Second polymer compositi on | 200 |
| Comparat ive Example 1 | 280 | 420 | First polymer compositi on | - | - | Not performed | - |
| Comparat ive Example 2 | 280 | 420 | First polymer compositi on | 30 | 300 | Not performed | - |
| Comparat ive Example 3 | 280 | 420 | - | - | - | First polymer compositi on | 200 |

### Evaluation Example 1. Molecular weight measurement

Using gel permeation chromatography (GPC, product of Hewlett Packard, model name: HP-1100), the tackifying resins prepared in Examples 1 to 10 and Comparative Examples 1 to 3 were measured for weight average molecular weight (Mw), number-average molecular weight (Mn), Z-average molecular weight (Mz), and polymer density index (PDI).

For the measurement of the Mw, Mn, Mz, and PDI, each of the tackifying resins prepared in Examples 1 to 10 and Comparative Examples 1 to 3 was dissolved in tetrahydrofuran to a concentration of 4,000 ppm, and 100 µl of each dissolved resin was injected into a GPC column. Here, tetrahydrofuran was as a mobile phase of GPC and flowed at a flow rate of 1.0 mL/min at 30 °C . For the column, three Plgel columns (1,000+500+100 Å) by Agilent Technologies, Inc. were connected in series. As a detector, an RI detector (product of Hewlett Packard, HP-1047A) was used, and the measurement was performed at 30 °C. The measurement results are shown in Table 2 below.

### Evaluation example 2. Softening point measurement

For each of the tackifying resins prepared in Examples 1 to 10 and Comparative Examples 1 to 3, the softening point was measured by using a ring and ball softening method (ASTM E 28). The resin was melted and poured into a ring-shaped mold, which was then placed in a beaker containing glycerin. A ball was placed on the ring containing the resin, and then the temperature was increased by 2.5 °C per minute. The temperature (softening point) at which the resin melts and the ball falls was measured and recorded as in Table 2 below.

### Evaluation example 3. Measurement of UV (240 to 262 nm) absorbance level

THF was placed in a UV measuring cell, and calibration was performed thereon. Then, each of the tackifying resins prepared in Examples 1 to 10 and Comparative Examples 1 to 3 was mixed with the THF to prepare a solution having a concentration of 70 ppm. Subsequently, the solution was placed in the UV measuring cell, the mode of the UV measuring device was set to Absorption, and then, the absorbance level at a wavelength of 200 to 350 nm was measured. The measurement results are shown in FIG. 1 and Table 2 below.

**[Table 2]**

| Classificati on | Softening point | Molecular weight | | | | UV absorbance level (240 nm to 262 nm) |
|---|---|---|---|---|---|---|
| | | Mn (g/mol) | Mw (g/mol) | Mz (g/mol) | PDI | |
| Example 1 | 56.7 | 599 | 777 | 1010 | 1.3 | 0.053 |
| Example 2 | 59.1 | 660 | 947 | 1376 | 1.46 | 0.067 |
| Example 3 | 62.1 | 580 | 681 | 1493 | 1.35 | 0.071 |
| Example 4 | 61 | 578 | 665 | 1536 | 1.37 | 0.087 |
| Example 5 | 65.4 | 580 | 719 | 1475 | 1.29 | 0.085 |
| Example 6 | 80.7 | 721 | 931 | 1225 | 1.29 | 0.076 |
| Example 7 | 60.2 | 652 | 948 | 1325 | 1.45 | 0.069 |
| Example 8 | 80.9 | 693 | 982 | 1352 | 1.42 | 0.073 |
| Example 9 | 79.2 | 712 | 912 | 1198 | 1.28 | 0.074 |
| Example 10 | 61.2 | 642 | 932 | 1319 | 1.45 | 0.068 |
| Comparati ve Example 1 | 85 | 729 | 925 | 1188 | 1.27 | 0.264 |
| Comparati ve Example 2 | 62.4 | 733 | 1007 | 2482 | 1.37 | 0.165 |
| Comparati ve Example 3 | 85.3 | 710 | 918 | 1201 | 1.29 | 0.080 |

### Preparation of acryl-based adhesive

15 wt% of each of the tackifying resins of Examples 1 to 10 and Comparative Examples 1 to 3 and 85 wt% of an acryl-based polymer were mixed, and 1 wt% of a photopolymerization initiator was additionally added thereto to prepare an acryl-based adhesive.

### Evaluation Example 5. Adhesive strength and shear adhesion measurements

### (1) Adhesive strength measurement

Measurements were performed by using Universal Testing Machine(UTM).

First, each of the acryl-based adhesives prepared from the tackifying resins of Examples 1 to 10 and Comparative Examples 1 to 3 was applied to a thickness of 50 micrometers on a PET film to prepare a tape. Subsequently, UV irradiation through an exposure device was performed on the tape, and then, the resulting tape was attached to a SUS-304 steel plate. The part to which the PET film was attached was mounted on a UTM grip, and the adhesive strength was measured at a speed of 30 mm/min. At this time, the value indicated on the UTM equipment represents the adhesive strength (N/mm). The measurement results are shown in Table 3 below.

### (2) Shear adhesion measurement (SAFT, Shear Adhesion Failure Test)

The shear adhesion of acryl-based adhesives including the tackifying resins according to Examples 1 to 10 and Comparative Examples 1 to 3 was evaluated according to ASTM D3654 method.

A test specimen tape, on which each of the acryl-based adhesives was applied to a thickness of 20 to 30 micrometers, was cut into pieces of 2 inch x 6 inch. Each cut test specimen was attached to a release paper, was cut into pieces with a size of 1 inch x 2 inch (width x length), and then attached to a washed SUS 304 steel plate (at this time, the non-attached test specimen was at least 2 cm in length, and the part required for the measurement was compressed by moving a roll back and forth once thereon using a roll down device from Cheminstruments, Inc.). The non-attached test specimen from the SUS 304 steel plate was cut with scissors to have a size of about 2 in length. The non-attached test specimen from the SUS 304 steel plate was put on a loop for measuring cohesion, and adhered to the passing test specimen. Two non-attached test specimens were attached with a fixing scotch tape on each side of the front and back sides parallel to the horizontal end of the SUS 304 steel plate to which the test specimen was attached, and then fixed in parallel positions between the loop for measuring cohesion and the SUS304 steel plate by using a stapler. The remaining test specimen was cut so that the test specimen was attached on the SUS 304 steel plate at a size of 1 inch x 1 inch (width x length).

The SUS304 steel plate was hanged on a SUS steel plate cradle in a shear test oven. A 1 kg weight was hanged on a loop for measuring holding power attached to the test specimen. Then, the temperature of the oven was increased at a rate of 0.4 degrees per minute, and the temperature at which the weight was fallen down is shown in Table 3 below.

**[Table 3]**

| | Adhesive strength (N/25 mm) | SAFT(°C) |
|---|---|---|
| Example 1 | 25 | 180 |
| Example 2 | 25 | 175 |
| Example 3 | 27 | 160 |
| Example 4 | 27 | 160 |
| Example 5 | 27 | 175 |
| Example 6 | 26 | 142 |
| Example 7 | 26 | 173 |
| Example 8 | 25 | 181 |
| Example 9 | 27 | 150 |
| Example 10 | 25 | 170 |
| Comparative Example 1 | 28 | 82 |
| Comparative Example 2 | 28 | 105 |
| Comparative Example 3 | 28 | 91 |

As shown in Table 3, when comparing the adhesive strength of the acryl-based adhesives including the tackifying resins of Examples 1 to 10 and Comparative Examples 1 to 3, respectively,

the acryl-based adhesives including the tackifying resins according to Examples 1 to 10 had excellent compatibility with an acryl-based polymer, and the UV absorbance of the tackifying resin was low, and thus, the amount of ultraviolet rays reaching the photopolymerization initiator increased, thereby promoting the photopolymerization reaction. Accordingly, the acryl-based adhesives including the tackifying resins according to Examples 1 to 10 had improved adhesive strength and shear adhesive strength compared to the acryl-based adhesives including the tackifying resins according to Comparative Examples 1 to 3.

The Examples and Comparative Examples above have been described as examples to describe the present disclosure, and therefore, the present disclosure is not limited thereto. It will be apparent to those skilled in the art that various modifications may be made therein to enable the present disclosure, and therefore, the technical protection scope of the disclosure should be defined by the appended claims.

## Claims

1. A tackifying resin comprising:
a repeating unit (a) derived from a petroleum resin-based monomer;
a repeating unit (b) derived from α-methylstyrene; and
a repeating unit (c) derived from a (meth)acrylic monomer,
wherein at least some of unsaturated bonds included in the repeating units (a) to (c) are hydrogenated.

2. The tackifying resin of claim 1,
wherein at least some of unsaturated bonds included in the repeating units (a) and (b) are hydrogenated.

3. The tackifying resin of claim 1,
wherein the petroleum resin-based monomer comprises a C9 fraction-based monomer.

4. The tackifying resin of claim 3,
wherein the C9 fraction-based monomer comprises a styrene-based monomer represented by Formula 1: 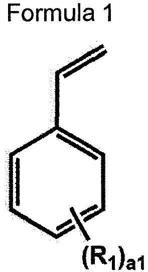 wherein, in Formula 1,
a1 is an integer from 0 to 5, and
R₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

5. The tackifying resin of claim 3,
wherein the C9 fraction-based monomer comprises styrene.

6. The tackifying resin of claim 1,
wherein the (meth)acrylic monomer is represented by Formula 2: 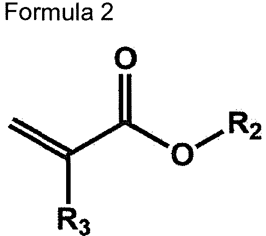 wherein, in Formula 2,
R₂ and R₃ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

7. The tackifying resin of claim 1,
wherein the (meth)acrylic monomer comprises an acrylic acid, a methyl acrylate, an ethyl acrylate, a propyl acrylate, a butyl acrylate, a methyl metacrylate, an ethyl metacrylate, a propyl metacrylate, a butyl metacrylate, a 2-ethylhexyl acrylate, or any combination thereof.

8. The tackifying resin of claim 1,
wherein an amount of the repeating unit (a) derived from a petroleum resin-based monomers is 10 to 50 wt% based on the total weight of the tackifying resin,
an amount of the repeating unit (b) derived from α-methylstyrene is 10 to 80 wt% based on the total weight of the tackifying resin, and
an amount of the repeating unit (c) derived from a (meth)acrylic monomer is 5 to 40 wt% based on the total weight of the tackifying resin.

9. The tackifying resin of claim 1,
wherein a weight average molecular weight (Mw) of the tackifying resin is 2,000 g/mol or less.

10. The tackifying resin of claim 1,
wherein a number-average molecular weight (Mn) of the tackifying resin is 2,000 g/mol or less,
a Z-average molecular weight (Mz) of the tackifying resin is 7,000 g/mol or less, and
a polymer dispersity index (PDI) of the tackifying resin is 1 to 3.

11. The tackifying resin of claim 1,
wherein a softening point of the tackifying resin is 40 to 120 °C.

12. The tackifying resin of claim 1,
wherein a UV absorbance (a THF solvent, a concentration of 70 ppm) at a wavelength of 240 nm to 260 nm of the tackifying resin is 0.1 or less.

13. A tackifying resin comprising:
a repeating unit (a) derived from a petroleum resin-based monomer;
a repeating unit (b) derived from α-methylstyrene; and
a repeating unit (c) derived from a (meth)acrylic monomer,
wherein a UV absorbance (a THF solvent, a concentration of 70 ppm) at a wavelength of 240 nm to 260 nm is 0.1 or less.
